(19) Europäisches Patentamt
European Patent Office
Office européen des brevets

(11) EP 4 647 464 A1

(12) # EUROPEAN PATENT APPLICATION
published in accordance with Art. 153(4) EPC

(43) Date of publication:
**12.11.2025 Bulletin 2025/46**

(21) Application number: **24779996.8**

(22) Date of filing: **22.03.2024**

(51) International Patent Classification (IPC):
***C08L 23/10*** *(2006.01)* ***C08K 3/013*** *(2018.01)*
***C08L 23/08*** *(2025.01)* ***C08L 67/04*** *(2006.01)*

(52) Cooperative Patent Classification (CPC):
**C08K 3/013; C08L 23/08; C08L 23/10; C08L 67/04**

(86) International application number:
**PCT/JP2024/011353**

(87) International publication number:
**WO 2024/203878 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 JP 2023047801**

(71) Applicants:
- **Sumitomo Chemical Company, Limited**
  **Tokyo 103-6020 (JP)**
- **Newlight Technologies, Inc.**
  **Huntington Beach CA 92647 (US)**

(72) Inventors:
- **FUKURODA Hiroshi**
  **Ichihara-shi, Chiba 299-0195 (JP)**
- **KAMEO Koji**
  **Ichihara-shi, Chiba 299-0195 (JP)**

(74) Representative: **Vossius & Partner Patentanwälte Rechtsanwälte mbB**
**Siebertstrasse 3**
**81675 München (DE)**

(54) **RESIN COMPOSITION AND MOLDED ARTICLE**

(57) A resin composition contains a recycled material (A) containing a propylene polymer, and a polyhydroxyalkanoate-based polymer (B), in which the content of a xylene-soluble component (CXS component) in the recycled material (A) is 1% by mass or more and 60% by mass or less. In the resin composition, the recycled material (A) may be a recycled material derived from a component for automobiles.

EP 4 647 464 A1

## Description

### Technical Field

The present invention relates to a resin composition and a molded article.

### Background Art

In order to reduce the burden on the environment, studies are underway on the possibility of recovering plastic parts such as bumpers from end-of-life vehicles, crushing and reusing the recovered plastic parts as synthetic resin materials. For example, Patent Literature 1 discloses a resin composition for automobile interior, in which the resin composition is obtained by mixing a ground material (A) of a vehicle bumper containing 0.1% to 10% by weight of an insoluble matter, crystalline polypropylene (B), an elastomer (C), an inorganic filler (D), and a light-shielding pigment (E) at a specific ratio, and heating and melting the mixture, and the insoluble matter contained in the resin composition is of a size that passes through a 20-mesh screen.

### Citation List

### Patent Literature

Patent Literature 1: Japanese Unexamined Patent Application Publication No. 2005-139421

### Summary of Invention

### Technical Problem

When a resin composition containing a recycled material of an end-of-life vehicle is injection-molded, there may have been cases where a molded article was difficult to be released from a mold because of dimensional stability and low molding shrinkage. Furthermore, even when a molded article obtained from a resin composition containing a recycled material is easily released from a mold, a large number of contaminants derived from impurities are contained in the recycled material, so that the tensile strain at break of the molded article may be small, and processability may be poor.

Therefore, an object of the present invention is to provide a resin composition capable of ease of releasing a molded article from a mold and obtaining a molded article having a sufficiently great tensile strain at break when the resin composition containing a recycled material is injection-molded. Furthermore, another object of the present invention is to provide a molded article obtained from the resin composition.

### Solution to Problem

The present invention includes, for example, the following [1] to [26].

[1] A resin composition contains a recycled material (A) containing a propylene polymer and a polyhydroxyalkanoate-based polymer (B).
[2] The resin composition according to [1], in which the recycled material (A) is a recycled material derived from a component for automobiles.
[3] The resin composition according to [1] or [2], in which the resin composition contains a propylene homopolymer.
[4] The resin composition according to any one of [1] to [3], in which the resin composition contains a heterophasic propylene polymer material.
[5] The resin composition according to [4], in which the heterophasic propylene polymer material has an isotactic pentad fraction of 0.961 or more.
[6] The resin composition according to any one of [1] to [5], in which the resin composition contains an ethylene-α-olefin copolymer.
[7] The resin composition according to any one of [1] to [6], in which the recycled material (A) contains an ethylene-α-olefin copolymer.
[8] The resin composition according to any one of [1] to [7], in which the resin composition contains a filling material.
[9] The resin composition according to [8], in which the filling material is an inorganic filling material.
[10] The resin composition according to [1], in which the recycled material (A) contains a filling material.
[11] The resin composition according to any one of [1] to [10], further containing a propylene polymer, in which

a content of the recycled material (A) is 15% to 70% by mass based on a total amount of the resin composition,
a content of the polyhydroxyalkanoate-based polymer (B) is 1% to 30% by mass based on the total amount of the resin composition, and
a content of the propylene polymer is 25% to 85% by mass based on the total amount of the resin composition.

[12] A molded article containing the resin composition according to any one of [1] to [11].
[13] A resin composition containing:

a recycled material (A) containing a propylene polymer; and
a polyhydroxyalkanoate-based polymer (B), in which
a content of a xylene-soluble component (CXS component) in the recycled material (A) is 1% by mass or more and 60% by mass or less.

[14] A resin composition containing:

a recycled material (A) containing a propylene polymer; and
a polyhydroxyalkanoate-based polymer (B), in which
the recycled material (A) contains an ash component, and
a content of the ash component is 1% by mass or more and 50% by mass or less with respect to 100% by mass of a total mass of the recycled material (A).

[15] The resin composition according to [13] or [14], in which the resin composition contains a heterophasic propylene polymer material.
[16] The resin composition containing:

a recycled material (A) containing a propylene polymer;
a polyhydroxyalkanoate-based polymer (B); and
a virgin propylene polymer, in which
the virgin propylene polymer contains a heterophasic propylene polymer material.

[17] The resin composition according to [15] or [16], in which the heterophasic propylene polymer material has an isotactic pentad fraction of 0.961 or more.
[18] The resin composition according to any one of [13] to [17], in which the recycled material (A) is a recycled material derived from a component for automobiles.
[19] The resin composition according to any one of [13] to [18], in which the resin composition contains a propylene homopolymer.
[20] The resin composition according to any one of [13] to [19], in which the resin composition contains an ethylene-$\alpha$-olefin copolymer.
[21] The resin composition according to any one of [13] to [20], in which the recycled material (A) contains an ethylene-$\alpha$-olefin copolymer.
[22] The resin composition according to any one of [13] to [21], in which the resin composition contains a filling material.
[23] The resin composition according to [22], in which the filling material is an inorganic filling material.
[24] The resin composition according to any one of [13] to [23], in which the recycled material (A) contains a filling material.
[25] The resin composition according to any one of [13] to [24], further containing a propylene polymer, in which

a content of the recycled material (A) is 15% to 70% by mass based on a total amount of the resin composition,
a content of the polyhydroxyalkanoate-based polymer (B) is 1% to 30% by mass based on the total amount of the resin composition, and
a content of the propylene polymer is 25% to 85% by mass based on the total amount of the resin composition.

[26] A molded article containing the resin composition according to any one of [13] to [26].

## Advantageous Effects of Invention

According to the present invention, it is possible to provide the resin composition capable of ease of releasing a molded article from a mold and obtaining a molded article having a sufficiently great tensile strain at break when the resin composition containing a recycled material is injection-molded. Furthermore, according to the present invention, it is

possible to provide the molded article obtained from the resin composition.

**Description of Embodiments**

Hereinafter, some embodiments of the present invention will be described in detail. However, the present invention is not limited to the following embodiments.

(Resin Composition)

A resin composition according to one embodiment of the present invention contains a recycled material (A) containing a propylene polymer and a polyhydroxyalkanoate-based polymer (B).

When the resin composition contains the recycled material (A) containing a propylene polymer and the polyhydroxyalkanoate-based polymer (B), a molded article is easily released from a mold during the injection molding of the resin composition containing the recycled material. Furthermore, the molded article has excellent tensile strain at break as compared with a resin composition containing a virgin propylene polymer and a polyhydroxyalkanoate-based polymer.

<Recycled Material (A)>

The resin composition contains a recycled material. The recycled material means a material that is recovered and reused after being subjected to processing such as molding or after being used for some end use. Examples of the raw material of the recycled material include interior components for automobiles (instrument panel, door trim, and the like), exterior components for automobiles (bumpers and the like), other components for automobiles (battery cases and the like), packaging containers (food retort pouches, refilling pouches, detergent bottles, and the like), housings for household electrical appliances, office supplies (trays and the like), and household daily necessities (contact lens cases and the like). The recycled material may be a recycled material derived from a component for automobiles.

The recycled material may be a recycled material that contains a propylene polymer (that is, a recycled propylene polymer). The propylene polymer contained in the recycled material may be a propylene homopolymer or a heterophasic propylene polymer material. The propylene polymer, the propylene homopolymer, and the heterophasic propylene polymer material will be described later.

The raw material of the recycled material may contain components other than the propylene polymer. The recycled material may contain, for example, a resin component such as an ethylene-$\alpha$-olefin copolymer, a filling material such as an inorganic filling material, and an additive such as a neutralizing agent, an antioxidant, an ultraviolet absorber, a nucleating agent, a lubricant, an antistatic agent, an antiblocking agent, a colorant (inorganic pigment, organic pigment, pigment dispersant, or the like), or a flame retardant.

The recycled material may be a recycled material that is obtained by a method including, in addition to a recovery step of recovering the raw material, a crushing step, a purification step, a melting step, a kneading step with other substances, a molding step into a pellet form, and the like. Examples of the purification step include washing with water, aqueous and/or oily agents, microbial treatment, magnetic sorting, and specific gravity sorting.

The melt mass flow rate (MFR) of the recycled material measured under the conditions of a temperature of 230°C and a load of 2.16 kgf in accordance with JIS K7210-2014 is preferably 1 g/10 min or more and 200 g/10 min or less from the viewpoint of facilitating easier release of a molded article from a mold and the viewpoint of facilitating a greater tensile strain at break of the resulting molded article. The MFR of the recycled material may be 180 g/10 min or less, 160 g/10 min or less, 140 g/10 min or less, 120 g/10 min or less, 100 g/10 min or less, 80 g/10 min or less, 60 g/10 min or less, or 50 g/10 min or less from the viewpoint of facilitating easier release of a molded article from a mold and the viewpoint of facilitating a greater tensile strain at break of the resulting molded article. The MFR of the recycled material may be 5 g/10 min or more, 10 g/10 min or more, 20 g/10 min or more, or 30 g/10 min or more, and may be 40 g/10 min or less, 30 g/10 min or less, 20 g/10 min or less, or 10 g/10 min or less.

<Polyhydroxyalkanoate-Based Polymer (B)>

The resin composition contains a polyhydroxyalkanoate-based polymer. The polyhydroxyalkanoate-based polymer is a polyester of hydroxyalkanoic acid. Examples of the hydroxyalkanoic acid include 2-hydroxyalkanoic acid, 3-hydroxyalkanoic acid, and 4-hydroxyalkanoic acid.

Examples of the 2-hydroxyalkanoic acid include glycolic acid, lactic acid, and 2-hydroxybutyric acid. Examples of the polyester of the 2-hydroxyalkanoic acid, that is, poly(2-hydroxyalkanoate)-based polymer include polyglycolic acid and polylactic acid.

Examples of the 3-hydroxyalkanoic acid include 3-hydroxybutyric acid, 3-hydroxypropionic acid, 3-hydroxypentanoic acid, and 3-hydroxyhexanoic acid. The polyester of the 3 hydroxyalkanoic acid, that is, poly(3-hydroxyalkanate)-based polymer will be described later.

Examples of the 4-hydroxyalkanoic acid include 4-hydroxybutyric acid, 4-hydroxypentanoic acid, and 4-hydroxyhexanoic acid.

The polyhydroxyalkanoate-based polymer may be a homopolymer of a hydroxyalkanoic acid or a polymer of two or more hydroxyalkanoic acids.

The poly(3-hydroxyalkanate)-based polymer is a polyhydroxyalkanoate (that is, a polyester of a hydroxyalkanoic acid), and contains a repeating unit of 3-hydroxyalkanate represented by the following formula (1).

$$[\text{-O-CHR-CH}_2\text{-CO-}] \ldots \qquad (1)$$

In formula (1), R is a hydrogen atom, a halogen atom, an alkyl group having 1 to 15 carbon atoms, a cyano group, an amino group having 1 to 18 carbon atoms, an alkoxy group (alkyloxy group) having 1 to 11 carbon atoms, an amide group having 1 to 20 carbon atoms, an aryl group having 6 to 12 carbon atoms, or a monovalent heterocyclic group having 1 to 9 carbon atoms. These groups may have a substituent. From the viewpoint of compatibility with a component other than the polyhydroxyalkanoate-based polymer (B), R may be an alkyl group having 1 to 8 carbon atoms, an amide group having 1 to 20 carbon atoms, or an aryl group having 6 to 8 carbon atoms.

Examples of the halogen atom include F, Cl, Br, and I.

The alkyl group having 1 to 15 carbon atoms may be linear or branched. The alkyl group may have 1 to 8 carbon atoms or 1 to 4 carbon atoms. Examples of the alkyl group include a methyl group, an ethyl group, a propyl group, an isopropyl group, a butyl group, an isobutyl group, a sec-butyl group, a tert-butyl group, a pentyl group, an isopentyl group, a 2-methylbutyl group, a 1-methylbutyl group, a hexyl group, an isohexyl group, a 3-methylpentyl group, a 2-methylpentyl group, a 1-methylpentyl group, a heptyl group, an octyl group, an isooctyl group, a 2-ethylhexyl group, a 3,7-dimethyloctyl group, a nonyl group, a decyl group, an undecyl group, a dodecyl group, a tetradecyl group, and a pentadecyl group.

Examples of the amino group having 1 to 18 or 1 to 11 carbon atoms include an amino group, an alkylamino group, a dialkylamino group, an arylamino group, an alkylarylamino group, a benzylamino group, and a dibenzylamino group.

Examples of the alkylamino group include a methylamino group, an ethylamino group, a propylamino group, a butylamino group, a pentylamino group, a hexylamino group, a heptylamino group, an octylamino group, a nonylamino group, a decylamino group, a dodecylamino group, an isopropylamino group, an isobutylamino group, an isopentylamino group, a sec-butylamino group, a tert-butylamino group, a sec-pentylamino group, a tert-pentylamino group, a tert-octylamino group, a neopentylamino group, a cyclopropylamino group, a cyclobutylamino group, a cyclopentylamino group, a cyclohexylamino group, a cycloheptylamino group, a cyclooctylamino group, a 1-adamantamino group, and 2-adamantamino group.

Examples of the dialkylamino group include a dimethylamino group, a diethylamino group, a dipropylamino group, a dibutylamino group, a dipentylamino group, a diisopropylamino group, a diisobutylamino group, a diisopentylamino group, a methylethylamino group, a methylpropylamino group, a methylbutylamino group, a methylisobutylamino group, a dicyclopropylamino group, a pyrrolidino group, a piperidino group, and a piperazino group.

Examples of the arylamino group include an anilino group, a 1-naphthylamino group, a 2-naphthylamino group, an o-toluidino group, a m-toluidino group, a p-toluidino group, a 1-fluoreneamino group, a 2-fluoreneamino group, a 2-thiazoleamino group, and a p-terphenylamino group.

Examples of the alkylarylamino group include an N-methylanilino group, an N-ethylanilino group, an N-propylanilino group, an N-butylanilino group, an N-isopropylanilino group, and an N-pentylanilino group.

Examples of the alkoxy group having 1 to 11 carbon atoms include a methoxy group, an ethoxy group, a propoxy group, an isopropoxy group, a butoxy group, an isobutoxy group, a sec-butoxy group, a tert-butoxy group, a cyclopropoxy group, a cyclobutoxy group, and a cyclopentoxy group.

The "amide group" means a group obtained by removing one hydrogen atom bonded to a nitrogen atom from a carboxylic amide. Examples of the amide group having 1 to 20 carbon atoms include a group represented by -NH-C(=O)-$R^A$ (provided that, $R^A$ is a hydrogen atom or a monovalent organic group) such as a formamide group, an acetamide group, a propionamide group, a butyramide group, a benzamide group, a trifluoroacetamide group, or a pentafluorobenzamide group; and a group represented by -N(-C(=O)-$R^A$)(-C(=O)-$R^B$) (where, $R^A$ and $R^B$ are each independently a hydrogen atom or a monovalent organic group) such as a diformamide group, a diacetamide group, a dipropioamide group, a dibutyroamide group, a dibenzamide group, a ditrifluoroacetamide group, or a dipentafluorobenzamide group. The organic group is an alkyl group, an alkoxy group, or an aryl group, and may be substituted with a halogen atom. The amide group may be a formamide group, an acetamide group, a propionamide group, a butyroamide group, or a benzamide group.

Examples of the aryl group having 6 to 12 carbon atoms include a phenyl group, a tolyl group, a xylyl group, a naphthyl group, and a biphenyl group. The aryl group having 6 to 12 carbon atoms may be a phenyl group, a tolyl group, or a xylyl group.

Examples of the heteroatom of the monovalent heterocyclic group having 1 to 9 carbon atoms include N, O, and S, may be saturated or unsaturated, may have a single heteroatom or a plurality of heteroatoms, and may have different types of heteroatoms. Examples of such a heterocyclic group include a thienyl group, a pyrrolyl group, a furyl group, a pyridyl group, a piperidinyl group, a quinolinyl group, an isoquinolinyl group, a pyrimidinyl group, a triazinyl group, and a thiazolyl group.

The repeating unit of the polyhydroxyalkanoate-based polymer may consist only of one or more kinds of 3-hydroxyalkanoate represented by formula (1), and may consist of one or more kinds of 3-hydroxyalkanoate represented by formula (1) and one or more kinds of other hydroxyalkanoates.

From the viewpoint of facilitating easier release of a molded article from a mold and the viewpoint of facilitating a greater tensile strain at break of the resulting molded article, the polyhydroxyalkanoate-based polymer preferably contains 50% by mol or more, and more preferably 70% by mol or more, of the repeating unit of 3-hydroxylkanoate represented by formula (1) with respect to the total repeating unit (100% by mol) of the hydroxyalkanoate.

Examples of the 3-hydroxyalkanoate represented by formula (1) include, in a case where R is a hydrogen atom or an alkyl group represented by $C_nH_{2n+1}$ and n is an integer of 1 to 15, 3-hydroxybutyrate with n = 1 (hereinafter, sometimes referred to as 3HB), 3-hydroxyvalerate with n = 2 (hereinafter, sometimes referred to as 3HV), 3-hydroxyhexanoate with n = 3 (hereinafter, sometimes referred to as 3HH), 3-hydroxyoctanoate with n = 5, 3-hydroxyoctadecanoate with n = 15, and 3-hydroxypropionate in which R is a hydrogen atom.

Examples of the polyhydroxyalkanoate-based polymer having only one repeating unit represented by formula (1) include poly(3-hydroxybutyrate) (hereinafter, sometimes referred to as P3HB).

Examples of the polyhydroxyalkanoate-based polymer having only a plurality of repeating units represented by formula (1) include poly(3-hydroxybutyrate-co-3-hydroxyhexanoate (hereinafter, sometimes referred to as P3HB3HH), poly(3-hydroxybutyrate-co-3-hydroxyvalerate (hereinafter, sometimes referred to as P3HB3HV), and poly(3-hydroxybutyrate-co-3-hydroxypropionate (hereinafter, sometimes referred to as P3HB3HP).

Examples of the other hydroxyalkanoates other than 3-hydroxyalkanoate represented by formula (1) include a repeating unit represented by formula (2).

$$[-O-CHR^1-C_mH_{2m+1}-CO-] \ldots \qquad (2)$$

In formula (2), $R^1$ is a hydrogen atom or an alkyl group represented by $C_nH_{2n+1}$, n is an integer of 1 or more and 15 or less, and m is an integer of 2 to 10.

Examples of the polyhydroxyalkanoate-based polymer containing the repeating units of formula (1) and formula (2) include poly(3-hydroxybutyrate-co-4-hydroxybutyrate) (for example following formula (P3HB4HB)).

From the viewpoint of increasing the melting point, it is preferable that the repeating unit of the polyhydroxyalkanoate-based polymer contains at least 3-hydroxybutyrate among the 3-hydroxyalkanoates represented by formula (1).

From the viewpoint of facilitating easier release of a molded article from a mold and the viewpoint of facilitating a greater tensile strain at break of the resulting molded article, the polyhydroxyalkanoate-based polymer preferably contains 50% by mol or more, and more preferably 70% by mol or more, of the repeating unit of 3-hydroxybutyrate with respect to the total repeating unit (100% by mol) of the hydroxyalkanoate.

The polyhydroxyalkanoate-based polymer may have two or more repeating units of ester, and may be, for example, a di-copolymer having two repeating units as described above, a tri-copolymer having three repeating units, and a tetra-copolymer having four repeating units.

Examples of the tri-copolymer include poly(3-hydroxybutyrate-co-3-hydroxyvalylate-co-3-hydroxyhexanoate) (hereinafter, sometimes referred to as (P3HB3HV3HH)).

As described above, from the viewpoint of facilitating easier release of a molded article from a mold and the viewpoint of facilitating a greater tensile strain at break of the resulting molded article, the polyhydroxyalkanoate-based polymer preferably contains 3-hydroxybutyrate among the repeating units of 3-hydroxyalkanoate represented by formula (1). A ratio XX of the repeating unit of 3-hydroxybutyrate to 100 mol of the ester repeating unit of the total hydroxyalkanoate is preferably 90% by mol or more, more preferably 95% by mol or more, and still more preferably 98% by mol or more. The ratio XX is usually 100% by mol or less, and may be 99.9% by mol or less, or may be 99.8% by mol or less.

The form of arrangement of the copolymer may be any form of a random copolymer, an alternating copolymer, a block copolymer, a graft copolymer, and the like.

The polyhydroxyalkanoate-based polymer may have another ester repeating unit in addition to those of formula (1) and formula (2), but the main chain of the other ester repeating unit does not contain an aromatic hydrocarbon structure. That is, the polyhydroxyalkanoate-based polymer is an aliphatic polyester. However, a group having an aromatic hydrocarbon group is bonded to carbon in the main chain of the other ester repeating unit.

As described in L. Tripathi., M. C. Factories, 11, 44 (2012), the composition ratio of the repeating unit in the polyhydroxyalkanoate-based polymer can be determined by calculation from the results of NMR measurement such as $^1H$-NMR or $^{13}C$-NMR.

Furthermore, the polyhydroxyalkanoate-based polymer may be a blend of two or more kinds of polyhydroxyalkanoate-based polymers.

From the viewpoint of facilitating easier release of a molded article from a mold and the viewpoint of facilitating a greater tensile strain at break of the resulting molded article, the weight-average molecular weight (Mw) of the polyhydroxyalkanoate-based polymer may be 10000 to 1000000, and is preferably 20000 to 800000 and more preferably 30000 to 600000. When the weight-average molecular weight is 10000 or more, a molded article excellent in impact strength and tensile elongation can be obtained. When the weight-average molecular weight is 500000 or less, the polyhydroxyalkanoate-based polymer has excellent dispersibility. The weight-average molecular weight may be 400000 or less, 300000 or less, 200000 or less, or 100000 or less. Note that, in the present specification, the weight-average molecular weight (Mw) is measured by GPC using standard polystyrene as a molecular weight standard substance.

The polyhydroxyalkanoate-based polymer may be a thermoplastic resin, and is suitably crystalline.

The melt mass flow rate (MFR) of the polyhydroxyalkanoate-based polymer as measured in accordance with JIS K7210-2014 under the conditions of a temperature of 190°C and a load of 2.16 kgf is preferably 0.1 g/10 min or more and 200 g/10 min or less from the viewpoint of facilitating easier release of a molded article from a mold and the viewpoint of facilitating a greater tensile strain at break of the resulting molded article. The MFR of the polyhydroxyalkanoate-based polymer may be 0.5 g/10 min or more, 1 g/10 min or more, 1.5 g/10 min or more, or 2 g/10 min or more. The MFR of the polyhydroxyalkanoate-based polymer may be 150 g/10 min or less, 100 g/10 min or less, 70 g/10 min or less, 50 g/10 min or less, 30 g/10 min or less, or 20 g/10 min or less.

The melting point (Tm) of the polyhydroxyalkanoate-based polymer may be 150°C or higher, 155°C or higher, 160°C or higher, 165°C or higher, 170°C or higher, or 175°C or higher. The melting point (Tm) of the polyhydroxyalkanoate-based polymer may be 220°C or lower, 200°C or lower, or 190°C or lower.

The melting point (Tm) of the polyhydroxyalkanoate-based polymer is measured by the position of a main peak based on melting of a crystal obtained by differential scanning calorimetry (DSC) measurement in accordance with JIS K7121.

The polyhydroxyalkanoate-based polymer may be produced by microorganisms, and may be derived from a compound (for example, a cyclic lactone or the like) derived from a petroleum or plant source.

In the polyhydroxyalkanoate-based polymer, each repeating unit of the hydroxyalkanate may consist of only the D-form (R-form) as in the case of a polymer produced from a microorganism, or the repeating unit of the hydroxyalkanoate may include both the D-form (R-form) and the L-form (S-form) as in the case of a polymer derived from a mixture of the D-form (R-form) and the L-form (S-form).

In a poly(3-hydroxyalkanoate)-based polymer produced from a microorganism, the repeating unit of formula (1) can be represented as the following formula. In formula (BI-1), n represents the degree of polymerization.

[Chem. 1]

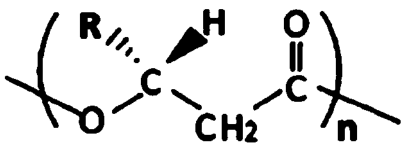

··· (B I − 1)

Poly-(3-hydroxybutyrate) produced from a microorganism has, for example, the following structure. In formula (BI-2), n represents the degree of polymerization.

[Chem. 2]

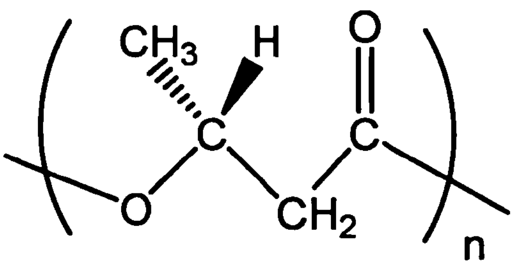

··· (B I − 2)

Poly-(3-hydroxybutyrate-co-3-hydroxyhexanoate) produced from a microorganism has, for example, the following structure. In formula (BI-3), m and n represent the degree of polymerization.

[Chem. 3]

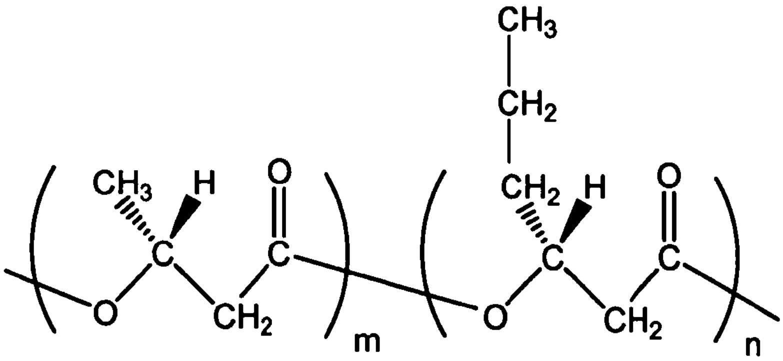

... (B I - 3)

Poly-(3-hydroxybutyrate-co-4-hydroxybutyrate) produced from a microorganism has, for example, the following structure. In formula (BI-4), m and n represent the degree of polymerization.

[Chem. 4]

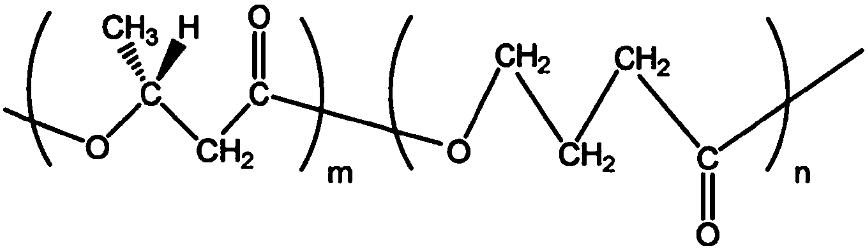

... (B I - 4)

The polyhydroxyalkanoate-based polymer can be biodegradable.

The poly(3-hydroxyalkanoate)-based polymer can be produced by, for example, microorganisms such as Alcaligenes eutrophus AC32 strain in which PHA synthase enzyme gene derived from Aeromonascaviae was introduced into Alcaligeneseutrophus (international deposit under the Budapest Treaty, international depositary authority: National Institute of Advanced Industrial Science and Technology Center (Center 6, 1-1-1 Higashi, Tsukuba City, Ibaraki Prefecture, Japan), original deposit date: August 12, 1996, transferred on August 7, 1997, accession number FERMBP-6038 (transferred from original deposit FERMP-15786)) (J. Bacteriol., 179, 4821 (1997)).

<Propylene Polymer>

The resin composition may contain a propylene polymer. The propylene polymer contained in the resin composition may be a propylene polymer derived from a recycled material (contained in the recycled material) or may contain a propylene polymer not derived from a recycled material (that is, a virgin propylene polymer). Note that, in the present specification, the "virgin propylene polymer" means a propylene polymer that, unlike a recycled material, has not been molded into a product for automobiles or any component thereof, nor used for any end use, after the propylene polymer is produced by a process including a polymerization step.

A propylene-based polymer is a polymer containing more than 50% by mass of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based polymer may be a combination of two or more kinds of propylene-based polymers.

As described above, the propylene-based polymer is a polymer containing a propylene unit in an amount of more than 50% by mass when the amount of all constituent units contained in the propylene-based polymer is 100% by mass. The propylene unit may be 60% by mass or more, or 70% by mass or more.

Examples of the propylene-based polymer include a propylene homopolymer and a copolymer of propylene and another monomer copolymerizable with propylene. Such a copolymer may be a random copolymer (hereinafter, also

referred to as a polypropylene-based random copolymer) or a block copolymer.

The propylene-based polymer may contain one kind of propylene-based polymer alone, or may contain two or more kinds of propylene-based polymers in any combination at any ratio.

Examples of the combination of two or more kinds of propylene-based polymers include a combination of two or more kinds of propylene homopolymers having different weight-average molecular weights and the like, and a combination of the following polymer (I) and polymer (II).

The propylene-based polymer may contain a heterophasic propylene polymer material. The heterophasic propylene polymer material means a propylene-based polymer (composition) containing the following polymer (I) and polymer (II), in which the polymer (I) and the polymer (II) are not compatible with each other and form different phases. In the propylene-based polymer (A), the heterophasic propylene polymer may account for 50% by mass or more, 60% by mass or more, 70% by mass or more, 80% by mass, or 90% by mass. When the resin composition contains the recycled material (A) containing a propylene polymer, the polyhydroxyalkanoate-based polymer (B), and a virgin heterophasic propylene polymer material, easier release of a molded article from a mold is facilitated, and a greater tensile strain at break of the resulting molded article is facilitated.

The polymer (I) is a propylene-based polymer containing a propylene unit in an amount of more than 80% by mass and 100% by mass or less when the amount of all constituent units is 100% by mass. The polymer (I) may be a propylene homopolymer or a copolymer of propylene and another monomer.

The polymer (II) is a propylene-based polymer which is a copolymer of a propylene unit and at least one monomer unit selected from the group consisting of an ethylene unit and an $\alpha$-olefin unit having 4 or more carbon atoms.

As each of the polymer (I) and the polymer (II), one kind of polymer may be used alone, or two or more kinds of polymers may be used in combination.

From the viewpoint of improving appearance, the resin composition preferably contains a heterophasic propylene polymer material.

From the viewpoint of further improving the rigidity of a molded article of the composition, the propylene-based polymer may have an isotactic pentad fraction (also referred to as a [mmmm] fraction) of 0.961 or more, preferably 0.97 or more, more preferably 0.98 or more as measured by $^{13}$C-NMR.

It can be said that the closer the isotactic pentad fraction of the propylene-based polymer is to 1, the higher stereoregularity of a molecular structure of the propylene-based polymer is, and the higher crystallinity of the polypropylene-based polymer is.

When the propylene-based polymer is a copolymer, the isotactic pentad fraction can be measured for a chain of propylene units in the copolymer.

From the viewpoint of further improving molding processability of the resin composition, the propylene-based polymer has a melt flow rate (MFR) of preferably 10 g/10 min or more, more preferably 15 g/10 min or more as measured in accordance with JIS K7210 under conditions of 230°C and a load of 2.16 kgf. From the viewpoint of facilitating easier release of a molded article from a mold and the viewpoint of facilitating a greater tensile strain at break of the resulting molded article, the melt flow rate of the polypropylene-based polymer is preferably 250 g/10 min or less, and more preferably 200 g/10 min or less. The melt flow rate of the polypropylene-based polymer is preferably 10 to 200 g/10 min.

The propylene-based polymer can be produced, for example, by a polymerization method using a polymerization catalyst.

Examples of the polymerization catalyst include a Ziegler type catalyst, a Ziegler-Natta type catalyst, a catalyst containing a compound containing a transition metal element of Group 4 of the periodic table and having a cyclopentadienyl ring and an alkylaluminoxane, a catalyst containing a compound containing a transition metal element of Group 4 of the periodic table and having a cyclopentadienyl ring, a compound that reacts with the compound to form an ionic complex, and an organic aluminum compound, and a catalyst in which a catalyst component (for example, a compound containing a transition metal element of Group 4 of the periodic table and having a cyclopentadienyl ring, a compound that forms an ionic complex, an organic aluminum compound, or the like) is supported on inorganic particles (for example, silica, clay minerals, or the like) and modified.

As the polymerization catalyst, a prepolymerization catalyst prepared by prepolymerizing a monomer such as ethylene or an $\alpha$-olefin in the presence of a catalyst may be used.

Examples of the Ziegler-Natta type catalyst include a catalyst in which a titanium-containing solid transition metal component and an organometallic component are combined.

Specific examples of the above polymerization catalyst include conventionally known catalysts described in Japanese Unexamined Patent Application Publication Nos. S61-218606, H5-194685, H7-216017, H9-316147, H10-212319, and 2004-182981.

Examples of the polymerization method include bulk polymerization, solution polymerization, and gas phase polymerization. Here, the bulk polymerization refers to a method for performing polymerization using a liquid olefin as a medium at a polymerization temperature. The solution polymerization refers to a method for performing polymerization in an inert hydrocarbon solvent such as propane, butane, isobutane, pentane, hexane, heptane, or octane. The gas phase

polymerization refers to a method for polymerizing a monomer in a gaseous state in a medium which is the monomer in a gaseous state.

Examples of a method in the above polymerization method (polymerizing method) include a batch method, a continuous method, and a combination thereof. The polymerizing method may be a multistage method performed using a plurality of polymerization reaction tanks connected in series.

As various conditions (polymerization temperature, polymerization pressure, monomer concentration, catalyst putting amount, polymerization time, and the like) in a polymerization step according to the above polymerization method, any suitable conditions can be appropriately determined according to an intended propylene-based polymer.

In producing the propylene-based polymer, in order to remove a residual solvent contained in the propylene-based polymer polymerized by the above polymerization method and an impurity such as an oligomer by-produced in the polymerization step, the propylene-based polymer polymerized by the above polymerization method may be held, for example, at a temperature at which a residual solvent or an impurity such as an oligomer can be volatilized and at a temperature at which the propylene-based polymer cannot be melted, modified, or the like. Examples of such a method for removing an impurity include any conventionally known suitable methods described in Japanese Unexamined Patent Application Publication No. S55-75410, Japanese Patent No. 2565753, and the like.

(Propylene Homopolymer)

From the viewpoint of improving the fluidity of the resin composition and the toughness of a molded article of the resin composition, the propylene homopolymer has a limiting viscosity number [$\eta$] of preferably 0.1 to 4 dL/g, more preferably 0.5 to 3 dL/g, still more preferably 0.7 to 2 dL/g.

From the viewpoint of improving the fluidity of the resin composition and the toughness of a molded article of the resin composition, the propylene homopolymer has a molecular weight distribution Mw/Mn of preferably 3 or more and less than 7, and more preferably 3 to 5. Here, Mw represents a weight-average molecular weight, and Mn represents a number-average molecular weight. Note that the molecular weight distribution is a numerical value measured by gel permeation chromatography (GPC).

(Propylene-Based Random Copolymer)

Examples of the propylene-based random copolymer include a random copolymer containing a propylene unit and an ethylene unit (hereinafter, referred to as a random copolymer (1)), a random copolymer containing a propylene unit and an $\alpha$-olefin unit having 4 or more carbon atoms (hereinafter, referred to as a random copolymer (2)), and a random copolymer containing a propylene unit, an ethylene unit, and an $\alpha$-olefin unit having 4 or more carbon atoms (hereinafter, referred to as a random copolymer (3)).

The $\alpha$-olefin having 4 or more carbon atoms and capable of constituting the propylene-based random copolymer is preferably an $\alpha$-olefin having 4 to 10 carbon atoms from the viewpoint of facilitating easier release of a molded article from a mold and the viewpoint of facilitating a greater tensile strain at break of the resulting molded article. Examples of the $\alpha$-olefin having 4 to 10 carbon atoms include 1-butene, 1-pentene, 1-hexene, 4-methyl-1-pentene, 1-octene, and 1-decene, and 1-butene, 1-hexene, and 1-octene are preferable.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

The content of the ethylene unit in the random copolymer (1) is preferably 0.1% to 40% by mass, more preferably 0.1% to 30% by mass, and still more preferably 2% to 15% by mass from the viewpoint of facilitating easier release of a molded article from a mold and the viewpoint of facilitating a greater tensile strain at break of the resulting molded article.

The content of the $\alpha$-olefin unit having 4 or more carbon atoms in the random copolymer (2) is preferably 0.1% to 40% by mass, more preferably 0.1% to 30% by mass, and still more preferably 2% to 15% by mass from the viewpoint of facilitating easier release of a molded article from a mold and the viewpoint of facilitating a greater tensile strain at break of the resulting molded article.

The total content of the ethylene unit and the $\alpha$-olefin unit having 4 or more carbon atoms in the random copolymer (3) is preferably 0.1% to 40% by mass, more preferably 0.1% to 30% by mass, and still more preferably 2% to 15% by mass from the viewpoint of facilitating easier release of a molded article from a mold and the viewpoint of facilitating a greater tensile strain at break of the resulting molded article.

The content of the propylene unit in the random copolymers (1) to (3) is preferably 60% to 99.9% by mass, more preferably 70% to 99.9% by mass, and still more preferably 85% to 98% by mass from the viewpoint of facilitating easier release of a molded article from a mold and the viewpoint of facilitating a greater tensile strain at break of the resulting molded article.

(Heterophasic Propylene Polymer Material)

As described above, the polymer (I) that can be contained in the heterophasic propylene polymer material is a polymer containing a propylene unit in an amount of more than 80% by mass and 100% by mass or less. The total content of the monomer units other than the propylene unit in the polymer (I) is usually 0% by mass or more and less than 20% by mass, and may be 0% by mass or 0.01% by mass or more.
Examples of the monomer capable of constituting the polymer (I) except propylene include ethylene and an α-olefin having 4 or more carbon atoms.
The α-olefin having 4 or more carbon atoms and capable of constituting the polymer (I) is preferably an α-olefin having 4 to 10 carbon atoms, more preferably 1-butene, 1-hexene, and 1-octene, and still more preferably 1-butene from the viewpoint of facilitating easier release of a molded article from a mold and the viewpoint of facilitating a greater tensile strain at break of the resulting molded article.
Examples of the polymer (I) include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.
Among them, the polymer (I) is preferably a propylene homopolymer, a propylene-ethylene copolymer, a propylene-1-butene copolymer, and a propylene-ethylene-1-butene copolymer from the viewpoint of facilitating easier release of a molded article from a mold and the viewpoint of facilitating a greater tensile strain at break of the resulting molded article, and more preferably a propylene homopolymer from the viewpoint of the rigidity of a molded article containing the composition.
The molecular weight distribution (Mw/Mn) of the polymer (I) measured by GPC is preferably 3 or more and less than 7 and more preferably 3 to 5 from the viewpoint of facilitating easier release of a molded article from a mold and the viewpoint of facilitating a greater tensile strain at break of the resulting molded article.
As described above, the polymer (II) is a copolymer of a propylene unit and at least one monomer unit selected from the group consisting of an ethylene unit and an α-olefin unit having 4 or more carbon atoms.
The total content of the ethylene unit and the α-olefin unit having 4 or more carbon atoms in the polymer (II) is preferably 20% to 80% by mass and more preferably 20% to 60% by mass from the viewpoint of facilitating easier release of a molded article from a mold and the viewpoint of facilitating a greater tensile strain at break of the resulting molded article.
The α-olefin having 4 or more carbon atoms and capable of constituting the polymer (II) is preferably an α-olefin having 4 to 10 carbon atoms from the viewpoint of facilitating easier release of a molded article from a mold and the viewpoint of facilitating a greater tensile strain at break of the resulting molded article. Examples of the α-olefin capable of constituting the polymer (II) include similar examples to the above examples of the α-olefin capable of constituting the polymer (I).
Examples of the polymer (II) include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and from the viewpoint of facilitating easier release of a molded article from a mold and the viewpoint of facilitating a greater tensile strain at break of the resulting molded article, a propylene-1-decene copolymer, a propylene-ethylene copolymer, a propylene-1-butene copolymer, and a propylene-ethylene-1-butene copolymer are preferable, and a propylene-ethylene copolymer is more preferable.
From the viewpoint of facilitating easier release of a molded article from a mold and the viewpoint of facilitating a greater tensile strain at break of the resulting molded article, the content of the polymer (II) in the heterophasic propylene polymer material is preferably 1% to 50% by mass, more preferably 1% to 40% by mass, still more preferably 5% to 30% by mass, and particularly preferably 8% to 15% by mass when the total content of the polymer (I) and the polymer (II) is 100% by mass.
Examples of the heterophasic propylene polymer material include a combination of a propylene homopolymer and a (propylene-ethylene) copolymer, a combination of a propylene homopolymer and a (propylene-ethylene-1-butene) copolymer, a combination of a propylene homopolymer and a (propylene-ethylene-1-hexene) copolymer, a combination of a propylene homopolymer and a (propylene-ethylene-1-octene) copolymer, a combination of a propylene homopolymer and a (propylene-1-butene) copolymer, a combination of a propylene homopolymer and a (propylene-1-hexene) copolymer, a combination of a propylene homopolymer and a (propylene-1-octene) copolymer, and a combination of a propylene homopolymer and a (propylene-1-decene) copolymer, in which the polymer (I) is a propylene homopolymer.
Furthermore, other examples of the heterophasic propylene polymer material include a combination of a (propylene-ethylene) copolymer and a (propylene-ethylene) copolymer, a combination of a (propylene-ethylene) copolymer and a (propylene-ethylene-1-butene) copolymer, a combination of a (propylene-ethylene) copolymer and a (propylene-ethylene-1-hexene) copolymer, a combination of a (propylene-ethylene) copolymer and a (propylene-ethylene-1-octene) copolymer, a combination of a (propylene-ethylene) copolymer and a (propylene-ethylene-1-decene)

copolymer; a combination of a (propylene-ethylene) copolymer and a (propylene-1-butene) copolymer, a combination of a (propylene-ethylene) copolymer and a (propylene-1-hexene) copolymer, a combination of a (propylene-ethylene) copolymer and a (propylene-1-octene) copolymer, a combination of a (propylene-ethylene) copolymer and a (propylene-1-decene) copolymer, a combination of a (propylene-1-butene) copolymer and a (propylene-ethylene) copolymer, a combination of a (propylene-1-butene) copolymer and a (propylene-ethylene-1-butene) copolymer, a combination of a (propylene-1-butene) copolymer and a (propylene-ethylene-1-hexene) copolymer, a combination of a (propylene-1-butene) copolymer and a (propylene-ethylene-1-octene) copolymer, a combination of a (propylene-1-butene) copolymer and a (propylene-ethylene-1-decene) copolymer, a combination of a (propylene-1-butene) copolymer and a (propylene-1-butene) copolymer, a combination of a (propylene-1-butene) copolymer and a (propylene-1-hexene) copolymer, a combination of a (propylene-1-butene) copolymer and a (propylene-1-octene) copolymer, a combination of a (propylene-1-butene) copolymer and a (propylene-1-decene) copolymer; a combination of a (propylene-1-hexene) copolymer and a (propylene-1-hexene) copolymer, a combination of a (propylene-1-hexene) copolymer and a (propylene-1-octene) copolymer, a combination of a (propylene-1-hexene) copolymer and a (propylene-1-decene) copolymer; and a combination of a (propylene-1-octene) copolymer and a (propylene-1-octene) copolymer, a combination of a (propylene-1-octene) copolymer and a (propylene-1-decene) copolymer, in which the polymer (I) is a polymer containing a propylene unit and a monomer unit except the propylene unit. Note that, in the examples of the above combination, the polymer (I) is described first, and the polymer (II) is described later.

From the viewpoint of facilitating easier release of a molded article from a mold and the viewpoint of facilitating a greater tensile strain at break of the resulting molded article, the heterophasic propylene polymer material that can be contained in the resin composition is preferably a combination of (a propylene homopolymer and a (propylene-ethylene) copolymer, a combination of a propylene homopolymer and a (propylene-ethylene-1-butene) copolymer, a combination of a (propylene-ethylene) copolymer and a (propylene-ethylene) copolymer, a combination of a (propylene-ethylene) copolymer and a (propylene-ethylene-1-butene) copolymer, and a combination of a (propylene-1-butene) copolymer and a (propylene-1-butene) copolymer, and more preferably a combination of a propylene homopolymer and a (propylene-ethylene) copolymer.

The heterophasic propylene polymer material can be produced by a production method including a multistage polymerization step including a first polymerization step of generating the polymer (I) and a second polymerization step of generating the polymer (II) in the presence of the polymer (I) generated in the first polymerization step. Polymerization of the heterophasic propylene polymer material can be performed using the catalyst exemplified as the above catalyst that can be used for producing a polypropylene-based polymer.

From the viewpoint of facilitating easier release of a molded article from a mold and the viewpoint of facilitating a greater tensile strain at break of the resulting molded article, the limiting viscosity number (hereinafter, referred to as $[\eta]_I$) of the polymer (I) is preferably 0.1 to 4 dL/g, more preferably 0.5 to 3 dL/g, and still more preferably 0.7 to 2 dL/g.

From the viewpoint of facilitating easier release of a molded article from a mold and the viewpoint of facilitating a greater tensile strain at break of the resulting molded article, the limiting viscosity number (hereinafter, referred to as $[\eta]_{II}$) of the polymer (II) is preferably 1 to 10 dL/g, more preferably 2 to 10 dL/g, and still more preferably 5 to 8 dL/g.

From the viewpoint of facilitating easier release of a molded article from a mold and the viewpoint of facilitating a greater tensile strain at break of the resulting molded article, a ratio of $[\eta]_{II}$ to $[\eta]_I$ ($[\eta]_{II}/[\eta]_I$) is preferably 1 to 20, more preferably 2 to 10, and still more preferably 2 to 9.

In a case where the polypropylene-based polymer is a heterophasic propylene polymer material composed of the polymer (I) and the polymer (II) formed by the multistage polymerization step as described above, a part of the polymer (I) generated in the first polymerization step is extracted from a polymerization tank in which the first polymerization step has been performed, the limiting viscosity number thereof is determined, the limiting viscosity number (hereinafter, referred to as $[\eta]_{Total}$) of the heterophasic propylene polymer material finally generated in the second polymerization step is determined, and the limiting viscosity number of the polymer (II) generated in the second polymerization step is calculated using these limiting viscosity numbers and the contents.

When the heterophasic propylene polymer material composed of the polymer (I) and the polymer (II) is produced by a production method in which the polymer (I) is obtained in the first polymerization step and the polymer (II) is obtained in the second polymerization step, the content of each of the polymer (I) and the polymer (II) and a procedure of measuring and calculating the limiting viscosity numbers ($[\eta]_{Total}$, $[\eta]_I$, and $[\eta]_{II}$) are as follows.

From the limiting viscosity number ($[\eta]_I$) of the polymer (I) obtained in the first polymerization step, the limiting viscosity number ($[\eta]_{Total}$) measured by the method described above for the final polymer (that is, the heterophasic propylene polymer material composed of the polymer (I) and the polymer (II)) obtained in the second polymerization step, and the content of the polymer (II) contained in the final polymer, the limiting viscosity number $[\eta]_{II}$ of the polymer (II) is calculated by the following formula.

$$\text{Formula: } [\eta]_{II} = ([\eta]_{Total} - [\eta]_I \times X_I)/X_{II}$$

In the formula,

$[\eta]_{Total}$ represents the limiting viscosity number (unit: dL/g) of the final polymer,
$[\eta]_I$ represents the limiting viscosity number (unit: dL/g) of the polymer (I),
$X_I$ represents a mass ratio of the polymer (I) to the final polymer, and
$X_{II}$ represents a mass ratio of the polymer (II) to the final polymer.

Note that $X_I$ and $X_{II}$ can be determined from a mass balance in the polymerization step.

Here, the mass ratio $X_{II}$ of the polymer (II) to the final polymer may be calculated by the following formula using the crystal melting heat amount of each of the polymer (I) and the final polymer.

$$\text{Formula: } X_{II} = 1 - (\Delta Hf)_T/(\Delta Hf)_P$$

In the formula,

$(\Delta Hf)_T$ represents the melting heat amount (unit: cal/g) of the final polymer (polymer (I) and polymer (II)), and
$(\Delta Hf)_P$ represents the melting heat amount (unit: cal/g) of the polymer (I).

(Ethylene-α-Olefin Copolymer)

The resin composition may contain an ethylene-α-olefin copolymer. The ethylene-α-olefin copolymer contained in the resin composition may be an ethylene-α-olefin copolymer derived from a recycled material (contained in the recycled material), or may contain an ethylene-α-olefin copolymer not derived from a recycled material (virgin ethylene-α-olefin copolymer).

The ethylene-α-olefin copolymer is a copolymer of ethylene and an α-olefin, the copolymer containing more than 50% by mass of a structural unit derived from ethylene. The content of the structural unit derived from ethylene in the ethylene-α-olefin copolymer may be 60% by weight or more, or 70% by mass or more.

The ethylene-α-olefin copolymer may be a copolymer having a monomer unit derived from an α-olefin having 3 to 20 carbon atoms and a monomer unit derived from ethylene. Examples of the α-olefin having 3 to 20 carbon atoms include propylene, 1-butene, isobutene, 1-pentene, 2-methyl-1-butene, 3-methyl-1-butene, 1-hexene, 2-methyl-1-pentene, 3-methyl-1-pentene, 4-methyl-1-pentene, 1-octene, 1-nonene, 1-decene, 1-undecene, and 1-dodecene, and propylene, 1-butene, 1-hexene, or 1-octene is preferable from the viewpoint of facilitating easier release of a molded article from a mold and the viewpoint of facilitating a greater tensile strain at break of the resulting molded article.

Examples of the ethylene-α-olefin copolymer include an ethylene-propylene copolymer, an ethylene-1-butene copolymer, an ethylene-1-hexene copolymer, and an ethylene-1-octene copolymer, and an ethylene-1-butene-1-hexene copolymer. The ethylene-α-olefin copolymer may be used singly, or in combination of two or more thereof. The ethylene-α-olefin copolymer is preferably an ethylene-1-butene copolymer or an ethylene-1-octene copolymer from the viewpoint of facilitating easier release of a molded article from a mold and the viewpoint of facilitating a greater tensile strain at break of the resulting molded article.

As one aspect of the resin composition, the content of the ethylene-α-olefin copolymer may be 1% by mass or more, or 5% by mass or more, with respect to 100% by mass of the total mass of the resin composition. The content of the ethylene-α-olefin copolymer may be 50% by mass or less, or 30% by mass or less, with respect to 100% by mass of the total mass of the resin composition.

The recycled material (A) may contain an ethylene-α-olefin copolymer. The content of the ethylene-α-olefin copolymer may be 1% by mass or more, or 5% by mass or more, with respect to 100% by mass of the total mass of the recycled material (A). Furthermore, the content of the ethylene-α-olefin copolymer may be 50% by mass or less, or 30% by mass or less, with respect to 100% by mass of the total mass of the recycled material (A).

(Filling Material)

The resin composition may contain a filling material (filler). Examples of the filling material include at least one selected from the group consisting of glass powder such as a glass bead, a glass balloon, or a glass flake, silicate mineral, alumina, magnesium oxide, antimony oxide, barium ferrite, strontium ferrite, beryllium oxide, magnesium hydroxide, aluminum hydroxide, basic magnesium carbonate, magnesium carbonate, carbonate mineral, calcium sulfate, magnesium sulfate, basic magnesium sulfate, calcium sulfite, cadmium sulfide, asbestos, mica, calcium carbonate, talc, silica, calcium silicate, hydrotalcite, kaolin, diatomaceous earth, graphite, pumice, ebony powder, cotton flock, cork powder, barium sulfate, fluororesin, cellulose powder, and wood powder.

In a case where the resin composition contains a filling material, the filling material may be a filling material derived from a recycled material (contained in the recycled material) or may be a filling material not derived from a recycled material (that is, a virgin filling material.

In a case where the filling material is in particulate form, the shape thereof is not limited, and may be a plate shape, a needle shape, or a fiber shape.

From the viewpoint of the rigidity, impact resistance, and dimensional stability of the resin composition and the molded article, the filling material is preferably an inorganic filling material, and more preferably talc that is a plate-shaped silicate mineral, from the viewpoint of facilitating easier release of a molded article from a mold and the viewpoint of facilitating a greater tensile strain at break of the resulting molded article.

As one aspect of the resin composition, the content of the filling material is preferably 1% by mass or more and may be 5% by mass or more with respect to 100% by mass of the total mass of the resin composition from the viewpoint of facilitating easier release of a molded article from a mold and the viewpoint of facilitating a greater tensile strain at break of the resulting molded article. The content of the filling material may be 50% by mass or less, or 30% by mass or less, with respect to 100% by mass of the total mass of the resin composition.

The recycled material (A) may contain a filling material. The content of the filling material may be 1% by mass or more, or 5% by mass or more, with respect to 100% by mass of the total mass of the recycled material (A). The content of the filling material may be 50% by mass or less, or 30% by mass or less, with respect to 100% by mass of the total mass of the recycled material (A).

As one aspect, the recycled material (A) may contain an ash component. The ash component means a component remaining as ash after the recycled material (A) is heated at 600°C for 60 minutes. The ash content is determined by the following method.

(Method for Measuring Ash Content)

A crucible is heated at 600°C for 60 minutes using an electric furnace, and the crucible is taken out, cooled in a desiccator for 1 hour, and then weighed with a precision balance. The crucible was charged with 10 g of the recycled material (A) and heated at 600°C for 60 minutes using the electric furnace to achieve complete ashing. Next, the crucible is cooled in the desiccator for 1 hour, the mass of the ash component is then measured up to 0.1 mg units with the precision balance, and the ash content (% by mass) with respect to the recycled material (A) is calculated.

In the recycled material (A), from the viewpoint of facilitating a greater tensile strain at break of the resulting molded article, the content of the ash component is preferably 1% by mass or more, and more preferably 5% by mass or more, with respect to 100% by mass of the total mass of the recycled material (A). From the viewpoint of facilitating a greater tensile strain at break of the resulting molded article, the content of the ash component is preferably 50% by mass or less, and more preferably 30% by mass or less, with respect to 100% by mass of the total mass of the recycled material (A). As one aspect, in the recycled material (A), the content of the ash component may be 1% by mass or more and 20% by mass or less, 1% by mass or more and 15% by mass or less, 1% by mass or more and 10% by mass or less, 2% by mass or more and 20% by mass or less, 2% by mass or more and 15% by mass or less, or 2% by mass or more and 10% by mass or less, with respect to 100% by mass of the total mass of the recycled material (A).

In a case where the recycled material (A) contains a filling material, most of the filling material is contained in the ash component of the recycled material (A). In the case where the recycled material (A) contains a filling material, the content of the filling material generally corresponds to the ash content of the recycled material (A).

From the viewpoint of facilitating easier release of a molded article from a mold and the viewpoint of facilitating a greater tensile strain at break of the resulting molded article, the content of a xylene-insoluble component (CXIS component) in the recycled material (A) is preferably 40% by mass or more and 99% by mass or less, and more preferably 50% by mass or more and 95% by mass or less, with respect to 100% by mass of the total mass of the recycled material (A). From the viewpoint of facilitating easier release of a molded article from a mold and the viewpoint of facilitating a greater tensile strain at break of the resulting molded article, the content of a xylene-soluble component (CXS component) in the recycled material (A) is preferably 1% by mass or more and 60% by mass or less, and more preferably 5% by mass or more and 50% by mass or less, with respect to 100% by mass of the total mass of the recycled material (A). As one aspect, the content of the xylene-soluble component (CXS component) in the recycled material (A) may be 1% by mass or more and 40% by mass or less, 5% by mass or more and 40% by mass or less, 9% by mass or more and 40% by mass or less, 1% by mass or more and 30% by mass or less, 5% by mass or more and 30% by mass or less, or 9% by mass or more and 30% by mass or less, with respect to 100% by mass of the total mass of the recycled material (A).

The content of the xylene-soluble component (CXS component) in the recycled material (A) can be measured by the following method. That is, 4 g of the recycled material (A) is weighed, and refluxed with boiling xylene for 5 hours using a cylindrical filter paper and a Soxhlet extraction tube. Next, the extract is concentrated under reduced pressure on a rotary evaporator to obtain a polymer component. The obtained polymer component is weighed (the "mass of the polymer component" is referred to as "a"). The polymer component is weighed in an amount of 2 g, dissolved in boiling xylene by

heating for 2 hours. Next, after cooling to 20°C, filtration is performed using filter paper. The filtered filtrate is concentrated under reduced pressure using a rotary evaporator to obtain a CXS component. The obtained CXS component is weighed (the "mass of the CXS component" is referred to as "b"). The content of the CXS component in the recycled material (A) is calculated by the following formula using the numerical values a and b.

$$\text{Content of CXS component (\% by mass)} = (b/a) \times 100$$

It is considered that the CXIS component in the recycled material (A) is mainly composed of the polymer (I) of the heterophasic propylene polymer material contained in the recycled material (A) and/or the propylene homopolymer. It is considered that the CXS component in the recycled material (A) is mainly composed of the polymer (II) of the heterophasic propylene polymer material contained in the recycled material (A) and/or the ethylene-α-olefin copolymer.

When the resin composition according to one embodiment contains the recycled polypropylene polymer (recycled material (A)), in which the content of the xylene-insoluble component (CXIS component) (or the content of the xylene-soluble component (CXS component)) is within the above range, and the polyhydroxyalkanoate-based polymer (B), the release of a molded article from a mold can be easily achieved, and a molded article having a sufficiently great tensile strain at break can be obtained when the molded article is produced using the resin composition. Although the release of a molded article from a mold can be easily achieved, and a molded article having a sufficiently great tensile strain at break can be obtained even in a case where the resin composition contains the virgin propylene polymer in which the content of the xylene-insoluble component (CXIS component) (or the content of the xylene-soluble component (CXS component)) is within the above range, and the polyhydroxyalkanoate-based polymer (B), the tensile strain at break of the resulting molded article tends to be slightly inferior as compared to the case where the resin composition contains the recycled propylene polymer in which the content of the xylene-insoluble component (CXIS component) (or the content of the xylene-soluble component (CXS component)) is within the above range. That is, in a case where the content of the xylene-insoluble component (CXIS component) (or the content of the xylene-soluble component (CXS component)) in both the recycled propylene polymer and virgin propylene polymer is within the above range, the resin composition containing the recycled propylene polymer in which the content of the xylene-insoluble component (CXIS component) (or the content of the xylene-soluble component (CXS component)) is within the above range is more likely to improve the tensile strain at break of the resulting molded article.

(Additive)

The resin composition may contain components other than the above components (hereinafter, also referred to as "other components") as necessary. Examples of the other components include thermoplastic resins (polystyrenes (for example, polystyrene, poly(p-methylstyrene), poly(α-methylstyrene), and AS (copolymer of acrylonitrile and styrene) resins), ABS (copolymer of acrylonitrile, butadiene, and styrene) resins, AAS (copolymer of special acrylic rubber, acrylonitrile, and styrene) resins, ACS (copolymer of acrylonitrile, chlorinated polyethylene, styrene) resins, polychloroprene, chlorinated rubber, polyvinyl chloride, polyvinylidene chloride, acrylic resins, copolymer resins of ethylene and vinyl alcohol, fluororesins, polyacetal, grafted polyphenylene ether resins and polyphenylene sulfide resins, polyurethane, polyamide, polyester resins (for example, polyethylene terephthalate and polybutylene terephthalate), polycarbonate, polysulfone, polyether ether ketone, polyether sulfone, aromatic polyester resins, polybutadiene, 1,2-polybutadiene, polyisoprene, copolymers of styrene and butadiene, copolymers of butadiene and acrylonitrile, natural rubber, and the like), epoxy resins, diallyl phthalate prepolymers, silicone resins, silicone rubber, epichlorohydrin rubber, acrylic rubber, PLA resins produced by polymerizing a plant-derived monomer extracted from a bio raw material (polylactic acid), neutralizing agents, antioxidants, ultraviolet absorbers, nucleating agents, lubricants, antistatic agents, antiblocking agents, processing aids, organic peroxides, colorants (inorganic pigment, organic pigment, pigment dispersant, and the like), foaming agents, foaming nucleating agents, plasticizers, flame retardants, crosslinking agents, crosslinking aids, brightness enhancement agents, antibacterial agents, and light diffusing agents. The resin composition may contain only one of the above components, or may contain a combination of two or more thereof.

Other components that can be contained in the resin composition may be a virgin material that is not derived from a recycled material, may be derived from a recycled material, may be contained in a raw material when recycled, or may be contained in a raw material for producing the present resin composition together with a recycled propylene polymer.

<Resin Composition>

The melt mass flow rate (MFR) of the resin composition measured under the conditions of a temperature of 230°C and a load of 2.16 kgf in accordance with JIS K7210-2014 may be 1 g/10 min or more, 10 g/10 min or more, 30 g/10 min or

more, 50 g/10 min or more, 70 g/10 min or more, 100 g/10 min or more, 120 g/10 min or more, 140 g/10 min or more, or 160 g/10 min or more. The MFR of the resin composition may be 500 g/10 min or less, 450 g/10 min or less, 400 g/10 min or less, 350 g/10 min or less, 300 g/10 min or less, or 250 g/10 min or less.

The tensile strain at break of the resin composition may be 10% or more, 15% or more, 20% or more, or 25% or more. The tensile strain at break of the resin composition may be 55% or less, 50% or less, 45% or less, or 40% or less. The tensile strain at break of the resin composition can be measured by a method described in Examples described later.

The content of the recycled material may be 15% by mass or more, 20% by mass or more, 25% by mass or more, or 30% by mass or more based on the total amount of the resin composition. The content of the recycled material may be 90% by mass or less, 80% by mass or less, 70% by mass or less, 60% by mass or less, 50% by mass or less, or 40% by mass or less based on the total amount of the resin composition.

The content of the polyhydroxyalkanoate-based polymer may be 1% by mass or more, 5% by mass or more, 7% by mass or more, or 10% by mass or more based on the total amount of the resin composition. The content of the polyhydroxyalkanoate-based polymer may be 30% by mass or less, 27% by mass or less, 25% by mass or less, 22% by mass or less, or 20% by mass or less based on the total amount of the resin composition.

The ratio of the content of the polyhydroxyalkanoate-based polymer to the content of the recycled material (content of polyhydroxyalkanoate-based polymer/content of recycled material) may be 0.01 or more, 0.1 or more, 0.2 or more, or 0.3 or more, and may be 2 or less, 1.5 or less, 1 or less, or 0.8 or less.

The content of the propylene polymer may be 25% by mass or more, 35% by mass or more, 40% by mass or more, 45% by mass or more, or 50% by mass or more based on the total amount of the resin composition. The content of the propylene polymer may be 85% by mass or less, 75% by mass or less, 70% by mass or less, 65% by mass or less, or 60% by mass or less based on the total amount of the resin composition.

The ratio of the content of the propylene polymer to the content of the recycled material (content of propylene polymer/content of recycled material) may be 0.1 or more, 0.5 or more, 1 or more, or 1.5 or more, and may be 6 or less, 5 or less, 4 or less, 3 or less, or 2.5 or less.

In a case where the resin composition further contains a propylene polymer not derived from a recycled material (for example, virgin propylene polymer), each of the content of the recycled material, the content of the polyhydroxyalkanoate-based polymer, and the content of the propylene polymer may be as follows based on the total amount of the resin composition. The content of the recycled material may be 15% to 70% by mass, 20% to 60% by mass, or 25% to 50% by mass, the content of the polyhydroxyalkanoate-based polymer may be 1% to 30% by mass, 5% to 27% by mass, or 7% to 25% by mass, and the content of the propylene polymer may be 25% to 85% by mass, 35% to 75% by mass, or 40% to 70% by mass.

<Method for Producing Resin Composition>

A method for producing the above resin composition according to the present embodiment will be described.

The method for producing the resin composition according to the present embodiment includes at least a step of obtaining a recycled material containing a propylene polymer from a component, and a step of mixing the recycled material with a polyhydroxyalkanoate-based polymer. Specifically, the resin composition can be obtained by melt-kneading the raw material components described above. The temperature during the melt-kneading may be 180°C or higher, 180°C to 300°C, or 180°C to 250°C.

For the melt-kneading, a Banbury mixer, a single-screw extruder, a co-rotating twin-screw extruder, or the like can be used.

The order of kneading the raw material components is not particularly limited. For example, the raw material components may be kneaded collectively, or some components among the raw material components may be kneaded, and then the resulting kneaded product and other components may be kneaded.

The shape of a propylene resin composition is not particularly limited, and may be, for example, a strand shape, a sheet shape, a flat plate shape, or a pellet shape. The pellet-shaped resin composition can be produced by, for example, forming a strand-shaped resin composition and then cutting the strand-shaped composition into an appropriate length.

From the viewpoint of molding processability of the resin composition and production stability in a case of producing a molded article, the shape of the resin composition before the molded article is subjected to the molding processing is preferably a pellet shape with a length of about 1 to 50 mm.

<Use of Molded Article>

Examples of the use of the molded article according to the present invention include a material for automobiles, a material for household electric appliances, a material for OA devices, a building material, drainage equipment, a toilet material, various tanks, a container, and a sheet.

Examples of the material for automobiles include interior components such as a door trim, a pillar, an instrumental

panel, a console, a rocker panel, an armrest, a door inner panel, and a spare tire cover, exterior components such as a bumper, a spoiler, a fender, a side step, and a door outer panel, components such as an air intake duct, a coolant reservoir tank, a radiator reserve tank, a window washer tank, a fender liner, and a fan, and integrally molded components such as a front end panel.

Examples of the material for household electric appliances include materials for a washing machine (outer tub, inner tub, lid, pulsator, balancer, washing pan, and the like), materials for a dryer (exterior, inner box, lid, and the like), materials for a vacuum cleaner, materials for a rice cooker, materials for a pot, materials for a warming machine, materials for a dishwasher, and materials for an air cleaner.

Examples of the material for OA devices and a media-related material include a case of a magnetic recording medium or an optical recording medium, components for a personal computer, and components for a printer.

Examples of the building material include frames for hardening concrete and the like, and wall members. Examples of the drainage equipment include pipes and pump parts. Examples of the material for containers include food filling containers, transportation containers, and garment containers. Examples thereof also include transportation pallets.

## Examples

Hereinafter, the present invention will be specifically described with reference to Examples. However, the present invention is not limited to Examples described below.

[Components Used in Examples, Comparative Examples, and Reference Examples]

In Examples, Comparative Examples, and Reference Examples, the following raw materials were used.

Component A: Recycled material containing propylene polymer

As a recycled material containing a propylene polymer, the following recycled polypropylene composition was prepared.

(A-1) Recycled polypropylene composition derived from automobile bumper recovered from market

Melt flow rate (MFR) (230°C, load: 2.16 kg): 42.0 g/10 min
Ash content: 18.1% by mass
Content of xylene-insoluble component (CXIS): 70.0% by mass
Content of xylene-soluble component (CXS): 30.0% by mass

(A-2) Recycled polypropylene composition derived from automobile bumper recovered from market

Content of xylene-insoluble component (CXIS): 99.7% by mass
Content of xylene-soluble component (CXS): 0.3% by mass

(A-3) Recycled polypropylene composition derived from automobile washer tank recovered from market

Melt flow rate (MFR) (230°C, load: 2.16 kg): 5.3 g/10 min
Ash content: 2.3% by mass
Content of xylene-insoluble component (CXIS): 90.9% by mass
Content of xylene-soluble component (CXS): 9.1% by mass

<Method for Measuring Ash Content>

A crucible was heated at 800°C for 60 minutes using an electric furnace, and the crucible was taken out, cooled in a desiccator for 1 hour, and then weighed with a precision balance. The crucible was charged with 10 g of a recycled polypropylene composition and heated at 800°C for 60 minutes using the electric furnace to achieve complete ashing. Next, the crucible is cooled in the desiccator for 1 hour, the weight of the ash component was then measured up to 0.1 mg units with the precision balance, and the ash content (% by mass) with respect to the recycled polypropylene composition was calculated.

<Method for Measuring Contents of CXIS component and CXS component>

The recycled polypropylene composition, A-2, or C-6 was weighed in an amount of 4 g, and refluxed with boiling xylene for 5 hours using a cylindrical filter paper and a Soxhlet extraction tube. Next, the extract was concentrated under reduced pressure on a rotary evaporator to obtain a polymer component. The obtained polymer component was weighed (hereinafter, the "mass of the polymer component" is referred to as "a"). The polymer component was weighed in an amount of 2 g, dissolved in boiling xylene by heating for 2 hours. Next, after cooling to 20°C, filtration was performed using filter paper. The filtered filtrate was concentrated under reduced pressure using a rotary evaporator to obtain a CXS component. The obtained CXS component was weighed (hereinafter, the "mass of the CXS component" is referred to as "b"). The contents of the CXIS component and the CXS component in the recycled polypropylene composition, A-2, or C-6 were calculated by the following formulae using the numerical values a and b. Furthermore, the solid remaining on the filter paper was vacuum-dried to obtain a CXIS component. The obtained CXIS component was used for evaluation of molecular weight distribution.

$$\text{Content of CXS component (\% by mass)} = (b/a) \times 100$$

Content of CXIS component (% by mass) = 100 - content of CXS component (% by mass)

Component B: Polyhydroxyalkanoate-based polymer
Poly(3-hydroxybutyrate) described below was prepared as the polyhydroxyalkanoate-based polymer.
Component B-1: poly(3-hydroxybutyrate)

manufactured by Newlight Technologies
Melt flow rate (MFR) (190°C, load: 2.16 kg): 2.4 g/10 min
Melting point: 170.9°C

Component C: Propylene polymer

The following components C-1, C-2, C-3, C-4, C-5, and C-6 were prepared as propylene polymers.

(C-1) Virgin propylene homopolymer

A virgin propylene homopolymer (C-1) was produced by a liquid-gas phase polymerization method using a polymerization catalyst obtained by the method described in Example 1 of Japanese Unexamined Patent Application Publication No. 2004-182981. The physical properties were as follows.
Melt flow rate (MFR) (230°C, load: 2.16 kg): 118 g/10 min

(C-2) Virgin propylene homopolymer

A virgin propylene homopolymer (C-2) was produced by a liquid-gas phase polymerization method using a polymerization catalyst obtained by the method described in Example 1 of Japanese Unexamined Patent Application Publication No. 2004-182981. The physical properties were as follows.
Melt flow rate (MFR) (230°C, load: 2.16 kg): 298 g/10 min

(C-3) Virgin propylene homopolymer

A virgin propylene homopolymer (C-3) was produced by a liquid-gas phase polymerization method using a polymerization catalyst obtained by the method described in Example 1 of Japanese Unexamined Patent Application Publication No. 2004-182981. The physical properties were as follows.
Melt flow rate (MFR) (230°C, load: 2.16 kg): 700 g/10 min

(C-4) Virgin propylene homopolymer

As the virgin propylene homopolymer (C-4), MF650Y manufactured by LyondellBasell Industries N.V was used.
Melt flow rate (MFR) (230°C, load: 2.16 kg): 1800 g/10 min

(C-5) Virgin heterophasic propylene polymer material

A heterophasic propylene polymer material was produced by a gas-phase polymerization method in the presence of a polymerization catalyst obtained by the method described in Example 1 of Japanese Unexamined Patent Application Publication No. 2004-182981. The physical properties of the obtained component C-5 are as follows.
Melt flow rate (MFR) (230°C, load: 2.16 kg): 32.4 g/10 min

(a) Propylene homopolymer (polymer (I)) limiting viscosity: 1.00 dL/g
(b) Ethylene-propylene random copolymer (polymer (II)) limiting viscosity: 5.0 dL/g

Content of ethylene-propylene random copolymer (polymer (II)): 16% by mass
Content of structural unit derived from ethylene in polymer (II): 43.0% by mass

In the component C-5, the "content of the structural unit derived from ethylene" in the "propylene-ethylene random copolymer" refers to the ethylene content in the polymer (II) (the content of the structural unit derived from ethylene based on the total mass of the polymer (II)).

<Method for Measuring Ethylene Content in Polymer (II)>

The ethylene content in the polymer (II) was determined from a $^{13}$C-NMR spectrum measured under the following conditions based on the report by Kakugo et al. (Macromolecules, 15, 1150-1152 (1982)). The $^{13}$C-NMR spectrum was measured under the following conditions using a sample in which about 200 mg of a heterophasic propylene polymer material was uniformly dissolved in 3 mL of orthodichlorobenzene in a test tube having a diameter of 10 mm.

Measurement temperature: 135°C
Pulse repetition time: 10 sec
Pulse width: 45°
Number of integrations: 2500 times

(C-6) Virgin heterophasic propylene polymer material

Content of xylene-insoluble component (CXIS): 69.5% by mass
Content of xylene-soluble component (CXS): 30.5% by mass

<Method for Measuring Limiting Viscosity>

The limiting viscosity (unit: dL/g) was measured at a temperature of 135°C using tetralin as a solvent by the following method.
The reduced viscosity was measured at three points of concentrations of 0.1 g/dL, 0.2 g/dL, and 0.5 g/dL using an Ubbelohde viscometer. The limiting viscosity number was determined by an extrapolation method in which the reduced viscosity was plotted with respect to the concentration and the concentration was extrapolated to zero. A method for calculating the limiting viscosity number by the extrapolation method is described, for example, in "Polymer solution, Polymer Experiment, vol. 11" (published by KYORITSU SHUPPAN CO., LTD., 1982), page 491.

Component D: Other components

The following components were used as other components.

· Hydrotalcite "DHT-4C" manufactured by Kyowa Chemical Industry Co., Ltd.
· "SUMILIZER GA80" (antioxidant) manufactured by Sumitomo Chemical Co., Ltd.
· "Irgafos168" (antioxidant) manufactured by BASF SE
· "SUMILIZER TPM" (antioxidant) manufactured by Sumitomo Chemical Co., Ltd.
· "Sumisorb 400" manufactured by Sumika Chemtex Co., Ltd.
· "Uvinul 5050H" (light stabilizer) manufactured by BASF SE
· "ALFLOW H-50P" (lubricant) manufactured by NOF Corporation

<Examples 1 to 4>

A propylene-based resin composition was produced by the following method.

Each of 10 parts by mass of a virgin propylene homopolymer (C-1) and 90 parts by mass of poly(3-hydroxybutyrate (B-1), and 0.1 parts by weight of "SUMILIZER TPM" and 0.1 parts by weight of "Sumisorb 400" as additives was weighed, and all the components were then mixed and kneaded under the conditions of a barrel temperature of 175°C and a screw rotation speed of 45 rpm using a single-screw kneader manufactured by TANABE PLASTIC MACHINERY CO., LTD. that has a screw diameter of 40 mm. Then, the kneaded product was extruded through a die hole, the molten strand was immersed in a cooling water tank, cooled and solidified, and cut with a pelletizer to obtain pellets of the poly(3-hydroxybutyrate) composition (B-2). Each of raw materials having the compositions in Table 1, and 0.03 parts by weight of "DHT-4C", 0.1 parts by weight of "SUMILIZER GA80", 0.05 parts by weight of "Irgafos 168", 0.02 parts by weight of "SUMILIZER TPM", 0.15 parts by weight of "Uvinul 5050H", 0.2 parts by weight of "Sumisorb 400", and 0.05 parts by weight of "Alflow H-50P" as additives was weighed, and all the components were then mixed and melt-kneaded using a twin-screw kneader KZW-15/45MG (cylinder inner diameter: 15.5 mm, screw outer diameter: 15.0 mm, L/D = 45) manufactured by TECHNOVEL CORPORATION to obtain pellet-shaped propylene-based resin compositions. The conditions for the melt-kneading were as follows: a cylinder temperature of 200°C; a screw rotation speed of 500 rpm; a two-layer screen composed of 100-mesh and 50-mesh screens; an extrusion amount of 6 kg/hr.

<Comparative Examples 1 to 4>

Pellet-shaped propylene-based resin compositions were obtained in the same manner as in Examples 1 to 4 according to the compositions in Table 1.

<Example 5, Comparative Example 5, and Reference Example 1>

A propylene-based resin composition was produced by the following method.

Each of 10 parts by mass of a virgin propylene homopolymer (C-1) and 90 parts by mass of poly(3-hydroxybutyrate (B-1), and 0.1 parts by weight of "SUMILIZER TPM" and 0.1 parts by weight of "Sumisorb 400" as additives was weighed, and all the components were then mixed and kneaded under the conditions of a barrel temperature of 175°C and a screw rotation speed of 45 rpm using a single-screw kneader manufactured by TANABE PLASTIC MACHINERY CO., LTD. that has a screw diameter of 40 mm. Then, the kneaded product was extruded through a die hole, the molten strand was immersed in a cooling water tank, cooled and solidified, and cut with a pelletizer to obtain pellets of the poly(3-hydroxybutyrate) composition (B-2). Each of raw materials having the compositions in Table 2, and 0.03 parts by weight of "DHT-4C", 0.1 parts by weight of "SUMILIZER GA80", 0.05 parts by weight of "Irgafos 168", 0.02 parts by weight of "SUMILIZER TPM", 0.15 parts by weight of "Uvinul 5050H", 0.2 parts by weight of "Sumisorb 400", and 0.05 parts by weight of "Alflow H-50P" as additives was weighed, and all the components were then mixed and melt-kneaded using a twin-screw kneader KZW-15/45MG (cylinder inner diameter: 15.5 mm, screw outer diameter: 15.0 mm, L/D = 45) manufactured by TECHNOVEL CORPORATION to obtain pellet-shaped propylene-based resin compositions. The conditions for the melt-kneading were as follows: a cylinder temperature of 200°C; a screw rotation speed of 500 rpm; a two-layer screen composed of 100-mesh and 50-mesh screens; an extrusion amount of 6 kg/hr.

<Measurement of Melt Flow Rate (MFR)>

The MFRs of the obtained propylene-based resin compositions were measured under conditions of a temperature of 230°C and a load of 2.16 kg according to a method specified in JIS K7210.

<Production of Injection-Molded Article for Evaluation of Tensile Strain at Break>

Pellet-shaped propylene-based resin compositions were injection-molded under the following conditions within the range described in JIS K7152 to produce injection-molded bodies for an evaluation of the tensile strain at break. The propylene-based resin compositions melted by an injection molding machine were supplied from a gate into a mold cavity by the injection molding machine. The measurement results are shown in Tables 1 and 2.

Injection molding machine: Si30III manufactured by Toyo Machinery & Metal Co., Ltd. (mold clamping force: 30 tons, cylinder diameter: 18 mm)
Cylinder temperature: 180°C
Mold temperature: 50°C
Injection speed: 20 mm/sec

Cooling time: 30 sec

<Evaluation of Sprue Releasability>

The pellet-shaped propylene-based resin compositions were dried at 100°C for 1 hour and then injection-molded under the following conditions. In a case where a sprue runner remained on the fixing side of a mold at the time of opening and closing the mold, it was determined that the releasability was poor, and in a case where the sprue runner did not remain on the fixing side of the mold at the time of opening and closing the mold, it was determined that the releasability was good. The number of times mold releasability was determined to be good out of 10 molding shots was evaluated. The evaluation results are shown in Tables 1 and 2. Note that the entries represented by "-" in the table means not measured.

Injection molding machine: Si30III manufactured by Toyo Machinery & Metal Co., Ltd. (mold clamping force: 30 tons, cylinder diameter: 18 mm)

Cylinder temperature: 180°C
Mold temperature: 50°C
Injection speed: 20 mm/sec
Cooling time: 30 sec

[Table 1]

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Component | A-1 | 30 | 30 | 90 | 80 | 30 | 30 | 30 | 30 |
| | B-2 | 10 | 20 | 10 | 20 | - | - | - | - |
| | C-2 | - | - | - | - | - | 70 | - | 35 |
| | C-3 | - | - | - | - | - | - | 70 | - |
| | C-4 | - | - | - | - | - | - | - | 35 |
| | C-5 | 60 | 50 | - | - | 70 | - | - | - |
| Evaluation result | MFR (g/10 min | 173 | 249 | 178 | 345 | 33 | 190 | 376 | 411 |
| | Tensile strain at break (%) | 40 | 27 | 88 | 30 | 57 | 8 | 5 | 6 |
| | Sprue releasability (number of times) | 6 | 7 | 5 | 6 | 0 | 0 | 0 | 0 |

[Table 2]

| | | Example 5 | Comparative Example 5 | Reference Example 1 |
|---|---|---|---|---|
| Component | A-2 | - | 90 | - |
| | A-3 | 90 | - | - |
| | C-6 | - | - | 90 |
| | B-2 | 10 | 10 | 10 |
| Evaluation result | Tensile strain at break (%) | 90 | 17 | 56 |
| | Sprue releasability (number of times) | 9 | - | - |

## Claims

**1.** A resin composition comprising:

a recycled material (A) comprising a propylene polymer; and
a polyhydroxyalkanoate-based polymer (B), wherein
a content of a xylene-soluble component (CXS component) in the recycled material (A) is 1% by mass or more and 60% by mass or less.

**2.** The resin composition according to claim 1, wherein the recycled material (A) is a recycled material derived from a component for automobiles.

**3.** The resin composition according to claim 1, wherein the resin composition comprises a propylene homopolymer.

**4.** The resin composition according to claim 1, wherein the resin composition comprises a heterophasic propylene polymer material.

**5.** The resin composition according to claim 4, wherein the heterophasic propylene polymer material has an isotactic pentad fraction of 0.961 or more.

**6.** The resin composition according to claim 1, wherein the resin composition comprises an ethylene-$\alpha$-olefin copolymer.

**7.** The resin composition according to claim 1, wherein the recycled material (A) comprises an ethylene-$\alpha$-olefin copolymer.

**8.** The resin composition according to claim 1, wherein the resin composition comprises a filling material.

**9.** The resin composition according to claim 8, wherein the filling material is an inorganic filling material.

**10.** The resin composition according to claim 1, wherein the recycled material (A) comprises a filling material.

**11.** The resin composition according to claim 1, further comprising a propylene polymer, wherein

a content of the recycled material (A) is 15% to 70% by mass based on a total amount of the resin composition,
a content of the polyhydroxyalkanoate-based polymer (B) is 1% to 30% by mass based on the total amount of the resin composition, and
a content of the propylene polymer is 25% to 85% by mass based on the total amount of the resin composition.

**12.** A molded article comprising the resin composition according to any one of claims 1 to 11.

## INTERNATIONAL SEARCH REPORT

International application No.
**PCT/JP2024/011353**

**A. CLASSIFICATION OF SUBJECT MATTER**

***C08L 23/10***(2006.01)i; ***C08K 3/013***(2018.01)i; ***C08L 23/08***(2006.01)i; ***C08L 67/04***(2006.01)i
FI: C08L23/10; C08L67/04; C08L23/08; C08K3/013

According to International Patent Classification (IPC) or to both national classification and IPC

**B. FIELDS SEARCHED**

Minimum documentation searched (classification system followed by classification symbols)

C08L

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2022-124475 A (SUMITOMO CHEMICAL COMPANY, LIMITED) 25 August 2022 (2022-08-25) claims, paragraphs [0017], [0071], [0115], example 1 | 1-12 |
| Y | WO 00/23489 A1 (CHISSO PETROCHEMICAL CORPORATION) 27 April 2000 (2000-04-27) claims, p. 22 | 1-12 |
| Y | JP 2009-173947 A (UBE INDUSTRIES, LTD.) 06 August 2009 (2009-08-06) paragraphs [0008], [0041] | 2, 7, 10 |
| Y | JP 2012-211243 A (RICOH COMPANY, LTD.) 01 November 2012 (2012-11-01) claims, paragraphs [0045], [0071], [0088], example 2 | 1-12 |
| Y | WO 2011/030922 A1 (SUMITOMO CHEMICAL COMPANY, LIMITED) 17 March 2011 (2011-03-17) claims, paragraphs [0009], [0019], [0037], example 2 | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2024** | **04 June 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/011353**

**C. DOCUMENTS CONSIDERED TO BE RELEVANT**

| Category* | Citation of document, with indication, where appropriate, of the relevant passages | Relevant to claim No. |
|---|---|---|
| Y | JP 2008-239858 A (INOAC CORP.) 09 October 2008 (2008-10-09)<br>claims, paragraph [0026], example 3 | 1-12 |
| Y | JP 2002-337179 A (MITSUBISHI JIDOSHA KOGYO KABUSHIKI KAISHA) 27 November 2002 (2002-11-27)<br>paragraph [0002] | 2, 7, 10 |
| Y | JP 7-241848 A (TOYODA SPINNING & WEAVING CO., LTD.) 19 September 1995 (1995-09-19)<br>examples | 2, 7, 10 |
| Y | JP 2003-268175 A (IDEMITSU PETROCHEMICAL CO., LTD.) 25 September 2003 (2003-09-25)<br>claims | 2, 7, 10 |

Form PCT/ISA/210 (second sheet) (July 2022)

**INTERNATIONAL SEARCH REPORT**
**Information on patent family members**

International application No.
**PCT/JP2024/011353**

| Patent document cited in search report | Publication date (day/month/year) | Patent family member(s) | Publication date (day/month/year) |
|---|---|---|---|
| JP 2022-124475 A | 25 August 2022 | EP 4279545 A1<br>claims, paragraphs [0017], [0074], [0125], example 1<br>TW 202244168 A<br>CN 117083334 A | |
| WO 00/23489 A1 | 27 April 2000 | US 2004/0072957 A1<br>claims, paragraph [0186]<br>EP 1162219 A1 | |
| JP 2009-173947 A | 06 August 2009 | (Family: none) | |
| JP 2012-211243 A | 01 November 2012 | (Family: none) | |
| WO 2011/030922 A1 | 17 March 2011 | US 2012/0184679 A1<br>claims, paragraphs [0015], [0028], [0052], example 2<br>CN 102482462 A | |
| JP 2008-239858 A | 09 October 2008 | (Family: none) | |
| JP 2002-337179 A | 27 November 2002 | (Family: none) | |
| JP 7-241848 A | 19 September 1995 | (Family: none) | |
| JP 2003-268175 A | 25 September 2003 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005139421 A
- JP S61218606 A
- JP H5194685 A
- JP H7216017 A
- JP H9316147 A
- JP H10212319 A
- JP 2004182981 A
- JP S5575410 A
- JP 2565753 B

### Non-patent literature cited in the description

- *J. Bacteriol.*, 1997, vol. 179, 4821
- **KAKUGO et al.** *Macromolecules*, 1982, vol. 15, 1150-1152
- Polymer solution, Polymer Experiment. KYORITSU SHUPPAN CO., LTD., 1982, vol. 11, 491